# EUROPÄISCHE PATENTSCHRIFT

(11) **EP 0 500 582 B1**
(45) Veröffentlichungstag und Bekanntmachung des Hinweises auf die Patenterteilung: **14.08.1996**
(21) Anmeldenummer: 90915766.1
(22) Anmeldetag: 02.11.1990
(51) Int. Cl.: H04N 3/22, H04N 9/28, H04N 9/31

(54) **Projektions- Fernsehgerät**
Television projector
Projecteur de télévision

(30) Priorität: 04.11.1989 DE 3936789
(43) Veröffentlichungstag der Anmeldung: 02.09.1992
(73) Patentinhaber: Deutsche Thomson-Brandt GmbH, 78003 Villingen-Schwenningen (DE)
(72) Erfinder: GLEIM, Günter, D-7730 VS-Villingen (DE); HEIZMANN, Friedrich, D-7730 VS-Obereschach (DE); CHAUVIN, Jacques, D-7733 Mönchweiler (DE)
(74) Vertreter: Einsel, Robert, Dipl.-Ing.
(86) Internationale Anmeldenummer: EP9001831
(87) Internationale Veröffentlichungsnummer: WO9107047

(56) Entgegenhaltungen:
- DE-A- 3 311 971
- US-A- 3 895 252
- US-A- 4 085 425
- US-A- 4 104 567
- US-A- 4 593 308
- Patent Abstracts of Japan, Band 11, Nr. 143 (E-504)(2590), 9. Mai 1987; & JP-A-61280171
- Patent Abstracts of Japan, Band 12, Nr. 291 (E-644)(3138), 9. August 1988; & JP-A-6367887

## Beschreibung

Die Erfindung geht aus von einem Projektions-Fernsehgerät gemäß dem Oberbegriff des Hauptanspruchs.

Unter Fernsehgerät wird in diesem Zusammenhang jede elektronische Einrichtung zur Bildwiedergabe verstanden, die mindestens eine Anzeigeeinheit aufweist, welche durch Ablenkgrößen angesteuert wird. Das Fernsehgerät kann von einem Fernseh-Rundfunksignal angesteuert werden oder als reiner Monitor ausgebildet sein und von einem RGB-Signal, einem FBAS-Signal oder getrennt mit dem Leuchtdichtesignal und dem Farbträger gespeist sein. Unter Bildjustierung ist in diesem Zusammenhang die Stabilisierung von Größe und Position eines darzustellenden Bildes zu verstehen.

Bei der genannten Anzeigeeinheit kann es sich beispielsweise um eine Bildröhre (Kathodenstrahlröhre (CRT)) eines gebräuchlichen Fernsehgerätes oder aber um mehrere Kathodenstrahlröhren als Teil eines Projektions-Fernsehgerätes handeln. Als Ablenkgrößen dienen in diesen Fällen Ablenkströme für die horizontale bzw. vertikale Ablenkung entsprechender Elektronenstrahlen.

Weiterhin ist es denkbar, daß es sich bei der Anzeigeeinheit um ein Laserstrahl-System handelt, wobei die Laserstrahl-Ablenkung beispielsweise durch reflektierende oder brechende Mittel erfolgt, die entsprechend angesteuert werden.

Derartige Laserstrahl-Systeme werden bevorzugt bei Projektions-Fernsehgeräten eingesetzt.

Fernsehgeräte der genannten Arten werden dazu verwendet, ein Gesamtbild auf einer entsprechenden Anzeigefläche (Bildschirm bzw. Projektionsfläche) zu erzeugen.

Wird dieses Gesamtbild von einer einzigen Bildröhre erzeugt, so führt eine ungewünschte Veränderung von Bildhöhe, -breite oder -position zu Beeinträchtigungen für einen Beobachter. Dieses kann beispielsweise auftreten, wenn das Fernsehgerät als Monitor dient und an unterschiedliche Bildquellen, wie beispielsweise Computer, angeschlossen wird.

Die genannten Beeinträchtigungen sind jedoch insbesondere dann sehr störend, wenn das Gesamtbild durch von mehreren Anzeigeeinheiten gebildeten Einzelbilder erzeugt wird, deren Höhe, Breite oder Position ungewünscht verändert sind. Diese Einzelbilder können zum einen auf einer gemeinsamen Fläche abgebildet sein, wie beispielsweise monochromatische Bilder der Grundfarben rot (R), grün (G), blau (B), die auf diese Weise ein Farbbild erzeugen. Zum anderen ist es aber auch möglich, daß die Teilbilder benachbart sind, d.h. auf angrenzenden Flächen abgebildet werden.

Es versteht sich von selbst, daß auch entsprechende Kombinationen möglich sind. Sinngemäße überlegungen gelten auch für die genannten Laserstrahl-Systeme.

Bei Projektions-Fernsehgeräten werden die monochromatischen Bilder in den Grundfarben R, G, B von drei getrennten Bildröhren auf eine gegenüber dem Schirm der Bildröhre wesentlich größere Bildfläche projiziert und dort zur Erzeugung eines farbigen Bildes überlagert. Die auf den Bildschirmen der Bildröhren erzeugten einzelnen Bilder werden dabei stark vergrößert. Durch diese Vergrößerung und durch sonstige Änderungen in den Schaltungen und den Projektionseinrichtungen kann es zu Instabilitäten in dem projizierten Bild kommen. Diese bestehen insbesondere in einer unerwünschten Verschiebung des Bildes auf der Bildfläche in horizontaler und vertikaler Richtung sowie einer Änderung der Amplitude der Horizontalablenkung oder der Vertikalablenkung.

Es ist bereits bekannt die Größe und Position von Einzelbildern, die ein Gesamtbild ergeben, mit Hilfe von Photosensoren zu regeln.

So wird beispielsweise in der US 4 085 425 ein Regelungssystem für die Größe und Position von Fernsehbildern vorgestellt, das Einzelbilder, die ein Gesamtbild ergeben mit Hilfe von Photosensoren erfaßt und durch geeignete Korrekturmittel entsprechend korrigiert.

Die in der genannten US-Patentschrift vorgestellte Verwendung der Photosensoren hat insbesondere bei einem Projektions-Fernsehgerät den Nachteil, daß geeignete Verbindungsleitungen zwischen den genannten Sensoren und einer geeigneten elektronischen Vorrichtung vorgesehen werden müssen.

Der Erfindung liegt die Aufgabe zugrunde, eine einfache und wirkungsvoll arbeitende Stabilisierung des auf die Bildfläche dargestellten Bildes ohne Verwendung von Photosensoren oder dgl. zu schaffen.

Diese Aufgabe wird durch das im Anspruch angegebene Projektions-Fernsehgerät gelöst.

Der Erfindung liegt die Erkenntnis zugrunde, daß Abweichungen von der gewünschten Strahlablenkung im wesentlichen durch elektronische Bauelemente verursacht werden und daß negative Einflüsse durch die entsprechende Strahloptik demgegenüber gering sind.

Das heißt, daß der Zusammenhang zwischen einer entsprechenden Ablenkgröße und der tatsächlichen Ablenkung in der Praxis keinen nennenswerten Schwankungen unterliegt.

Erfindungsgemäß werden die Ablenkgrößen für die horizontale und/oder vertikale Ablenkung innerhalb eines Zeitraumes erfaßt, zu dem ihr entsprechender Sollwert bekannt ist.

Durch Vergleich von Soll- und Istwerten werden Korrekturen durchgeführt, so daß die Abweichungen in horizontaler und/oder vertikaler Richtung vorgegebe Werte nicht überschreiten.

Die Erfindung wird anhand der Zeichnung an einem bevorzugten Ausführungsbeispiel erläutert, wobei die einzige Figur ein bevorzugtes Ausführungsbeispiel für die Regelung der Amplitude des Ablenkstroms zeigt.

Bevor auf die Beschreibung des Ausführungsbeispiels näher eingegangen wird, sei darauf hingewiesen, daß die in der Figur einzeln dargestellte Blöcke lediglich zum besseren Verständnis der Erfindung dienen. Üblicherweise sind einzelne oder mehrere dieser Blöcke zu Einheiten zusammengefaßt. Diese können in integrierter oder Hypridtechnik oder als programmgesteuerter Mikrorechner, bzw. als Teil eines zu seiner Steuerung geeigneten Programmes realisiert sein.

Weiterhin sei darauf hingewiesen, daß die in den einzelnen Stufen enthaltenee Elemente auch getrennt ausgeführt werden können.

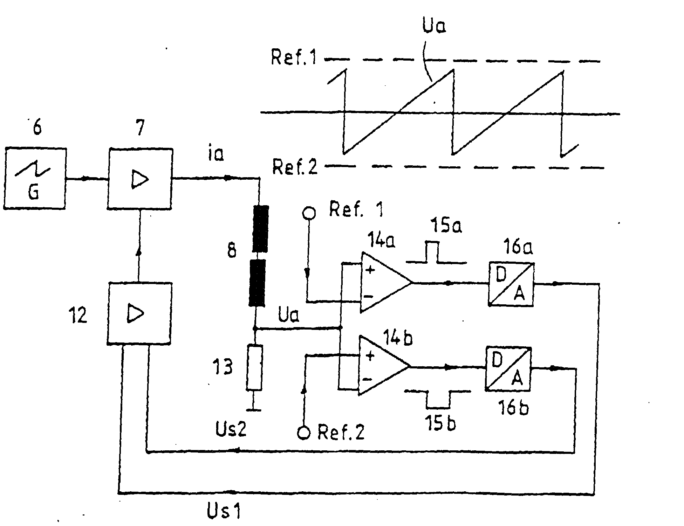

Bei dem bevorzugten Ausführungsbeispiel gemäß der Figur speist ein Vertikal-Ablenkgenerator 6 über einen Verstärker 7 die Vertikalablenkspulen 8, die einer nicht dargestellten Bildröhre zugeordnet sind, mit dem Ablenkstrom ia. Bei einem Projektions-Fernsehgerät sind üblicherweise drei derartige Bildröhren vorgesehen, deren monochromatische Bilder der Grundfarben rot, grün, blau auf die Bildfläche 1 (s. Fig. 1) projiziert und dort überlagert werden.

Mit den Vertikal-Ablenkspulen 8 ist ein Widerstand 13 mit seinem ersten Anschluß verbunden, dessen zweiter Anschluß an Masse führt. An dem ersten Anschluß wird durch den Ablenkstron ia eine zu diesem proportionale Spannung Ua verursacht, die in den Differenzverstärkern 14a und 14b mit Referenzspannungen Ref.1 und Ref.2 verglichen wird. Die Differenzverstärker 14a und 14b liefern bei Abweichung von den Referenzwerten impulsförmige Signale 15a und 15b, die in zwei D/A-Wandlern 16a und 16b in analoge Signale umgewandelt werden. Die am Ausgang der D/A-Wandler 16a und 16b gewonnenen analogen, ständig vorhandenen Stellgrößen Us1 und Us2 wirken über einen Treiber 12 auf den Ablenkverstärker 7 so ein, daß Us1 die positiven Werte des Ablenkstromes ia, also die Vertikalamplitude zum oberen Bildrand, und Us2 die negativen Werte von ia, also die Ablenkamplitude zum unteren Bildrand stabilisiert.

Die Schaltung gemäß der Figur ist praktisch unverändert für die Stabilisierung der Horizontalablenkamplitude anwendbar, indem der Zeilenablenkstrom über den Widerstand 13 geführt wird und die gewonnenen Stellgrößen auf die Zeitenendstufe zur Regelung der Amplitude des Zeilenablenkstroms einwirken.

Bei dem Aüsführungsbeispiel werden die Korrekturspannungen nur kurzzeitig gewonnen, nämlich wenn der Ablenkstrom seinen positiven bzw. negativen Maximalwert erreicht, bzw. wenn der Lichtstrahl 10 auf einen der Sensoren S trifft.

Da die Korrektur selbst ständig wirksam sein muß, ist es erforderlich, die jeweils nur kurzzeitig gewonnene Korrekturspannung in eine ständig vorhandene Korrekturspannung umzuwandeln. In der Figur dienen die D/A-Wandler 16a, 16b zu dem Zweck, die nur kurzzeitig auftretenden Signale 15a und 15b in ständig vorhandene analoge Signale umzuwandeln. Die Signale 15a und 15b dienen dabei als ein digitales Signal mit einem Bit, das jeweils am Ausgang der Wandler 16a und 16b ein entsprechendes analoges Signal erzeugt. Die Fähigkeit derartiger Wandler, ein auseinem binären Signal erzeugtes analoges Ausgangssignal beliebig lange aufrechtzuerhalten, wird vorteilhaft für die Umwandlung der impulsförmigen Korrekturspannung in eine ständig vorhandene analoge Korrekturspannung ausgenutzt.

Es werden somit jeweils die obere Bildhälfte und die untere Bildhälfte getrennt voneinander stabilisiert, wobei die Nullinie, also die Horizontale in der Bildmitte nicht beeinflußt wird. Durch die getrennte Stabilisierung der Ablenkamplitude in positiver und negativer Richtung kann es im allgemeinen Fall zu einer Kombination einer Änderung der Gesamtablenkamplitude mit einer Änderung der Bildlage kommen. Die gleichen Verhältnisse gelten auch für die Stabilisierung der Horizontalablenkamplitude H.

Die beschriebene Regelung der Ablenkamplitude ist auch für unterschiedliche Betriebsarten mit verschiedenen Ablenkamplituden anwendbar, z.B. wenn die Vertikalablenkamplitude die Höhe des normalen Bildes im Sinne eines Überschreibens überschreitet. Der Korrekturstrom für die Stabilisierung der Ablenkamplitude muß nicht unbedingt den Ablenkspulen selbst zugeführt werden. Der Korrekturstrom kann z.B. auch den für die Konvergenzkorrektur vorgeschenen zusätzlichen Ablenkspulen zugeführt werden, weil diese die Ablenkamplitude in gleicher Weise beeinflussen können.

## Patentansprüche

1. Projektions-Fernsehgerät mit drei mit Ablenkströmen (ia) gespeisten Wiedergaberöhren, deren Bilder über optische Mittel auf eine Projektionsfläche (1) projiziert und dort zur Deckung gebracht werden, wobei Mittel zur Einstellung der richtigen Größe und Lage des Bildes (2) auf der Projektionsfläche (1) vorgesehen sind und diese Mittel zwei Differenzverstärker (14a, 14b) umfassen, die eingangsseitig von einer dem Ablenkstrom proportionalen Spannung (Ua) beaufschlagt werden und ausgangsseitig mit einem Ablenkverstärker (7) in Verbindung stehen, **dadurch gekennzeichnet**, daß zur Realisierung dieser Einstellmittel die dem Ablenkstrom (ia) proportionale Spannung (Ua) über einem vom Ablenkstrom durchflossenen Bauteil (13) abgreifbar und an den nicht-invertierenden Eingang des ersten Differenzverstärkers (14a) und an den invertierenden Eingang des zweiten Differenzverstärkers (14b) angelegt ist, daß an den invertierenden Eingang des ersten Differenzverstärkers (14a) und an den nichtinvertierenden Eingang des zweiten Differenzverstärkers (14b) zwei unterschiedliche Referenzspannungen (Ref. 1, Ref. 2) angelegt sind, und daß die impulsförmigen Ausgangssignale (15a, 15b) der Verstärker (14a, 14b) an die Eingänge von zwei D/A-Wandlern (16a, 16b) angelegt sind, deren analoge Ausgangsspannungen (Us1, US2) an die Eingänge einer Addierstufe (12) angelegt sind, deren analoge Ausgangsspannung als Stellgröße für die Verstärkung des Ablenkverstärkers (7) dient.

## Claims

1. Projection television apparatus including three reproduction tubes which are fed by deflection currents (ia) and whose images are projected via optical means onto a projection surface (1) where they are made co-incident, wherein there are provided means for setting the correct size and location of the picture (2) on the projection surface (1) and these means comprise two differential amplifiers (14a, 14b) to which a voltage (Ua) proportional to the deflection current is applied on the input side and which are connected to a deflection amplifier (7) on the output side, characterised in that, for the implementation of these setting means, the voltage (Ua), which is proportional to the deflection current (ia), can be tapped off from a component (13) through which the deflection current flows and be applied to the non-inverting input of the first differential amplifier (14a) and to the inverting input of the second differential amplifier (14b), that two different reference voltages (Ref. 1, Ref. 2) are applied to the inverting input of the first differential amplifier (14a) and to the non-inverting input of the second differential amplifier (14b), and that the pulse shaped output signals (15a, 15b) from the amplifiers (14a, 14b) are applied to the inputs of two D/A converters (16a, 16b) whose analogue output voltages (Us1, US2) are applied to the inputs of an adding stage (12) whose analogue output voltage serves as a control value for the amplification factor of the deflection amplifier (7).

## Revendications

1. Téléviseur de projection intégrant trois tubes de reproduction alimentés par des courants de balayage (ia) et dont les images sont projetées, par l'intermédiaire de moyens optiques, sur une surface de projection (1) où elles sont superposées, sachant que des moyens sont prévus pour le réglage des dimensions et position correctes de l'image (2) sur ladite surface de projection (1), lesdits moyens comprenant deux amplificateurs différentiels (14a, 14b) dont les entrées reçoivent une tension (Ua) proportionnelle au courant de balayage (ia) et dont les sorties sont reliées à un amplificateur de balayage (7), téléviseur de projection **caractérisé en ce que**, pour réaliser lesdits moyens de réglage, la tension (Ua) proportionnelle au courant de balayage (ia) peut être prélevée au niveau d'un composant (13) parcouru par ledit courant de balayage, cette tension étant appliquée à l'entrée non invertissante du premier amplificateur différentiel (14a) et à l'entrée invertissante du second amplificateur différentiel (14b), caractérisé en outre en ce que deux tensions de référence (Ref. 1, Ref. 2) différentes sont appliquées à l'entrée invertissante du premier amplificateur différentiel (14a) et à l'entrée non invertissante du second amplificateur différentiel (14b), et caractérisé enfin en ce que les signaux de sortie pulsés (15a, 15b) desdits amplificateurs (14a, 14b) sont amenés aux entrées de deux convertisseurs numériques-analogiques (16a, 16b) dont les tensions de sortie analogiques (Us1, Us2) sont appliquées aux entrées d'un additionneur (12) dont la tension de sortie analogique sert de paramètre de réglage du gain de l'amplificateur de balayage (7).
